# EUROPEAN PATENT APPLICATION

(11) **EP 4 697 804 A1**
(43) Date of publication of application: **18.02.2026**
(21) Application number: 24806295.2
(22) Date of filing: 22.04.2024
(51) Int. Cl.: H04W 36/00, H04W 36/14, H04W 36/08

(54) **SWITCHING METHOD AND APPARATUS**

(30) Priority: 12.05.2023 CN 202310541400
(71) Applicant: Huawei Technologies Co., Ltd., Shenzhen, Guangdong 518129 (CN)
(72) Inventor: LU, Rui, Shenzhen, Guangdong 518129 (CN); HU, Xingxing, Shenzhen, Guangdong 518129 (CN)
(74) Representative: Goddar, Heinz J.
(86) International application number: PCT/CN2024/089167
(87) International publication number: WO 2024/234939

(57) **Abstract**

A handover method and an apparatus are provided. The method includes: receiving a handover request message from a second access network device; sending a path switch request message to a core network device; and sending first indication information to the core network device when a handover complete message from a terminal device is received, where the first indication information indicates that the terminal device is handed over to a first access network device, and the path switch request message is sent between receiving the handover request message and receiving the handover complete message. According to the foregoing method, after receiving the handover request message, the first access network device sends the path switch request message to the core network device before receiving the handover complete message, so that the core network device can process the path switch request message in advance, thereby reducing a handover delay caused by processing the path switch request message, and improving handover efficiency of the terminal device.

## Description

### CROSS-REFERENCE TO RELATED APPLICATION

This application claims priority to Chinese Patent Application No. 202310541400.2, filed with the China National Intellectual Property Administration on May 12, 2023 and entitled "HANDOVER METHOD AND APPARATUS", which is incorporated herein by reference in its entirety.

### TECHNICAL FIELD

This application relates to the field of communication technologies, and in particular, to a handover method and an apparatus.

### BACKGROUND

Non-terrestrial network (non-terrestrial network, NTN) communication is communication implemented via a non-terrestrial network device. An NTN system may include a satellite system and the like. The NTN communication is introduced to mobile network communication, for example, 5th generation (5th generation, 5G) communication, so that user experience can be improved. In one aspect, an NTN can provide a communication service for an area that is difficult to be covered by a terrestrial network, for example, an ocean, a forest, a desert, or a remote region. In another aspect, the NTN can enhance reliability of mobile communication, for example, provide a more stable communication service for users in a high-speed movement scenario, for example, a train or an airplane. In addition, the NTN can further provide more data transmission resources, and support connections of more terminal devices.

In a mobile communication network, due to movement of a terminal device, signal quality of a current serving cell deteriorates, and the terminal device needs to be handed over to a neighbor cell with better signal quality. However, in the NTN system, coverage duration of the non-terrestrial network device in an area on the ground is very short as the non-terrestrial network device moves at a high speed relative to the ground. Consequently, the terminal device frequently changes a serving cell. Therefore, in the NTN system, mobility of the non-terrestrial network device is a main reason why the terminal device performs cell handover.

Because a coverage area of an NTN cell is very large (a coverage radius ranges from dozens of kilometers to hundreds of kilometers), and one cell includes an extremely large quantity of terminal devices, movement of the non-terrestrial network device causes a large quantity of terminal devices to simultaneously require cell handover. In a cell handover process, a large amount of signaling interaction occurs. Therefore, processing a large quantity of cell handover requests of the terminal devices in short time causes processing load of a network, and even causes signaling congestion.

### SUMMARY

This application provides a handover method and an apparatus, to improve efficiency of processing cell handover of a terminal device by a network.

According to a first aspect, this application provides a handover method. The method may be performed by a first access network device or an apparatus, for example, a chip, used in the first access network device. The method includes: receiving a handover request message from a second access network device; sending a path switch request message to a core network device; and sending first indication information to the core network device when a handover complete message from a terminal device is received, where the first indication information indicates that the terminal device is handed over to the first access network device, and the path switch request message is sent between receiving the handover request message and receiving the handover complete message.

According to the foregoing method, after receiving the handover request message, the first access network device sends the path switch request message to the core network device before receiving the handover complete message, so that the core network device can process the path switch request message in advance, thereby reducing a handover delay caused by processing the path switch request message, and improving handover efficiency of the terminal device.

In a possible implementation method, the path switch request message includes time information of the terminal device to be handed over the first access network device.

In a possible implementation method, the time information includes a time point at which the terminal device is handed over to the first access network device; or the time information includes a time range in which the terminal device is handed over to the first access network device.

In a possible implementation method, the method further includes: receiving a path switch request acknowledge message from the core network device.

In a possible implementation method, the first indication information is a preset message; or the first indication information is a first uplink data packet from the terminal device.

In the foregoing solution, when the first indication information is the preset message, the core network device may be directly indicated that the terminal device accesses the first access network device. When the first indication information is the first uplink data packet, it may be indicated in an indirect manner that the terminal device accesses the first access network device, and no separate message is required for indication, thereby reducing signaling overheads between the access network device and the core network device.

In a possible implementation method, the method further includes: sending second indication information to the core network device, where the second indication information indicates to cancel switching of a data transmission path of the terminal device to the first access network device.

In a possible implementation method, the first access network device includes a non-terrestrial network device.

The foregoing solution is applied to an NTN communication system. When a large quantity of terminal devices need to be handed over simultaneously due to movement of a non-terrestrial network device, because the core network device can obtain path switch request messages corresponding to these terminal devices in advance, the core network device has sufficient time to process a large quantity of path switch request messages before triggering path switch, thereby reducing a handover delay, avoiding occurrence of signaling congestion, and improving system stability.

According to a second aspect, this application provides a handover method. The method may be performed by a core network device or an apparatus, for example, a chip, used in the core network device. The method includes: receiving a path switch request message from a first access network device; receiving first indication information from the first access network device, where the first indication information indicates that a terminal device is handed over to the first access network device; and triggering, based on the path switch request message and the first indication information, switching of a data transmission path of the terminal device to the first access network device.

In a possible implementation method, the method further includes: sending a path switch request acknowledge message to the first access network device.

In a possible implementation method, the first indication information is a preset message; or the first indication information is a first uplink data packet from the terminal device.

In a possible implementation method, the method further includes: receiving second indication information from the first access network device, where the second indication information indicates to cancel switching of the data transmission path of the terminal device to the first access network device; and triggering, based on the second indication information, cancellation of switching of the data transmission path of the terminal device to the first access network device.

According to a third aspect, this application provides a handover method. The method may be performed by a first access network device or an apparatus, for example, a chip, used in the first access network device. The method includes: receiving a handover request message from a second access network device, where the handover request message includes time information of a terminal device to be handed over to the first access network device; and sending a path switch request message to a core network device, where the handover request message includes the time information, and the path switch request message is sent between receiving the handover request message and receiving a handover complete message.

According to the foregoing method, after receiving the handover request message, the first access network device sends the path switch request message to the core network device before receiving the handover complete message, so that the core network device can process the path switch request message in advance, thereby reducing a handover delay caused by processing the path switch request message, and improving handover efficiency of the terminal device. This method is particularly applicable to an NTN communication system. Further, the path switch request message includes the time information, so that the core network device can determine, based on the time information, when the terminal device accesses the first access network device, and can trigger switching of a data transmission path of the terminal device to the first access network device based on the time information. This reduces signaling overheads between the core network device and the access network device, improves resource utilization, and avoids a signaling storm.

In a possible implementation method, the time information is a time point at which the terminal device is handed over to the first access network device; or the time information is a time range in which the terminal device is handed over to the first access network device.

In a possible implementation method, the method further includes: receiving the handover complete message from the terminal device.

In a possible implementation method, the method further includes: sending second indication information to the core network device when a handover cancellation request message from the second access network device is received, where the second indication information indicates to cancel switching of a data transmission path of the terminal device to the first access network device, and the handover cancellation request message indicates to cancel handover of the terminal device to the first access network device.

In a possible implementation method, the method further includes: sending second indication information to the core network device, where the second indication information indicates to cancel switching of a data transmission path of the terminal device to the first access network device.

In a possible implementation method, the first access network device includes a non-terrestrial network device.

According to a fourth aspect, this application provides a handover method. The method may be performed by a core network device or an apparatus, for example, a chip, used in the core network device. The method includes: receiving a path switch request message from a first access network device, where the path switch request message includes time information of a terminal device to be handed over to the first access network device; and triggering, based on the path switch request message and the time information, switching of a data transmission path of the terminal device to the first access network device.

In a possible implementation method, the time information is a time point at which the terminal device is handed over to the first access network device; and the triggering, based on the path switch request message and the time information, switching of the data transmission path of the terminal device to the first access network device includes: triggering, at the time point based on the path switch request message, switching of the data transmission path of the terminal device to the first access network device.

In a possible implementation method, the time information is a time range in which the terminal device is handed over to the first access network device; and the triggering, based on the path switch request message and the time information, switching of the data transmission path of the terminal device to the first access network device includes: triggering, at a maximum moment of the time range based on the path switch request message, switching of the data transmission path of the terminal device to the first access network device.

According to a fifth aspect, an embodiment of this application provides a communication apparatus. The apparatus may be a first access network device or a module (for example, a chip) used in the first access network device. The apparatus has a function of implementing any one of the implementation methods in the first aspect or the third aspect. The function may be implemented by hardware, or may be implemented by hardware executing corresponding software. The hardware or software includes one or more modules corresponding to the foregoing functions.

According to a sixth aspect, an embodiment of this application provides a communication apparatus. The apparatus may be a core network device, or may be a module (for example, a chip) used in the core network device. The apparatus has a function of implementing any one of the implementation methods in the second aspect or the fourth aspect. The function may be implemented by hardware, or may be implemented by hardware executing corresponding software. The hardware or software includes one or more modules corresponding to the foregoing functions.

According to a seventh aspect, an embodiment of this application provides a communication apparatus, including a processor and a memory. The memory is configured to store computer instructions, and when the apparatus runs, the processor executes the computer instructions stored in the memory, to enable the apparatus to perform any one of the implementation methods in the first aspect to the fourth aspect.

According to an eighth aspect, an embodiment of this application provides a communication apparatus, including units or means (means) configured to perform steps of any one of the implementation methods in the first aspect to the fourth aspect.

According to a ninth aspect, an embodiment of this application provides a communication apparatus, including a processor and an interface circuit. The processor is configured to communicate with another apparatus through an interface circuit, and perform any one of the implementation methods in the first aspect to the fourth aspect. There are one or more processors.

According to a tenth aspect, an embodiment of this application provides a communication apparatus, including a processor coupled to a memory. The processor is configured to invoke a program stored in the memory, to perform any one of the implementation methods in the first aspect to the fourth aspect. The memory may be located inside or outside the apparatus. In addition, there may be one or more processors.

According to an eleventh aspect, an embodiment of this application further provides a computer-readable storage medium. The computer-readable storage medium stores instructions, and when the instructions are run on a communication apparatus, any one of the implementation methods in the first aspect to the fourth aspect is performed.

According to a twelfth aspect, an embodiment of this application further provides a computer program product. The computer program product includes a computer program or instructions. When the computer program or the instructions are run by a communication apparatus, any one of the implementation methods in the first aspect to the fourth aspect is performed.

According to a thirteenth aspect, an embodiment of this application further provides a chip system, including a processor, configured to perform any one of the implementation methods in the first aspect to the fourth aspect.

According to a fourteenth aspect, an embodiment of this application further provides a communication system, including a first access network device configured to perform any one of the implementation methods in the first aspect and a core network device configured to perform any one of the implementation methods in the second aspect.

According to a fifteenth aspect, an embodiment of this application further provides a communication system, including a first access network device configured to perform any one of the implementation methods in the second aspect and a core network device configured to perform any one of the implementation methods in the fourth aspect.

These or other aspects of this application are more concise and easier to understand in the descriptions of the following embodiments.

### BRIEF DESCRIPTION OF DRAWINGS

FIG. 1 is a diagram of an NTN scenario according to an embodiment of this application;
FIG. 2 is a diagram of another NTN scenario according to an embodiment of this application;
FIG. 3 is a diagram of a structure of an access network device according to an embodiment of this application; and
FIG. 4 is a diagram of an earth fixed cell according to an embodiment of this application;
FIG. 5 is a diagram of an earth moving cell according to an embodiment of this application;
FIG. 6 is a schematic flowchart of a handover method according to an embodiment of this application;
FIG. 7 is a schematic flowchart of a handover method according to an embodiment of this application;
FIG. 8 is a schematic flowchart of a handover method according to an embodiment of this application;
FIG. 9 is a diagram of a structure of a communication apparatus according to an embodiment of this application; and
FIG. 10 is a diagram of a structure of a communication apparatus according to an embodiment of this application.

### DESCRIPTION OF EMBODIMENTS

The following describes in detail embodiments of this application with reference to the accompanying drawings of the specification.

A communication method provided in embodiments of this application may be applied to an NTN communication scenario. NTN communication may include networking by using a non-terrestrial network device, for example, an uncrewed aerial vehicle, a high altitude platform station (high altitude platform station, HAPS), or a satellite, to provide services such as data transmission and voice communication for a terminal device. In addition, an NTN system may further include another non-terrestrial network device. This is not limited in this application.

The NTN system may further support various mobile communication systems, for example, another communication system such as a new radio (new radio, NR) system, a long term evolution (long term evolution, LTE) system, or a future communication system. This is not specifically limited herein.

A satellite system is used as an example of the NTN system. Satellites may be classified into geostationary orbit (geostationary earth orbit, GEO) satellites, medium earth orbit (medium earth orbit, MEO) satellites, and low earth orbit (low earth orbit, LEO) satellites based on a satellite altitude, that is, a satellite orbit altitude. A GEO is a synchronous earth satellite orbit. Satellites running on the orbit are stationary relative to the ground. An orbital altitude of the GEO is generally 35786 kilometers (km). An LEO and an MEO are collectively referred to as non-geostationary orbits (non-geostationary orbit, NGSO). Satellites running on this type of orbits move at a high speed relative to the ground. An orbital altitude of the LEO generally ranges from 160 km to 2000 km, and an orbital altitude of the MEO generally ranges from 2000 km to 35786 km. For the NGSO, based on whether beams of a satellite move with the satellite, earth moving cells (earth moving cell) and earth fixed cells (earth fixed cell) may be further obtained through classification. For the earth moving cell, the cell moves relative to the ground, and a beam direction of the satellite moves with the satellite. For the earth fixed cell, the cell is fixed relative to the ground within specific time, and an antenna of the satellite may use a beamforming capability of the antenna to fix the beam direction within a specific area of the ground within the specific time.

In the NTN communication, operating modes of an NTN device may include a transparent (transparent) mode and a regenerative (regenerative) mode. Based on the operating modes of the NTN device, NTN communication architectures may be classified into the following two types. One is a transparent (transparent) forwarding architecture. In the architecture, the NTN device may be a relay (relay) or an amplifier, and may perform radio frequency filtering, amplification, and the like, to regenerate a physical layer signal. The NTN device may be responsible for layer 1 (layer 1, L1) relay, is configured to perform physical layer forwarding, and is invisible to a higher layer. The other is a regenerative (regenerative) architecture. In the architecture, the NTN device has a processing function of an access network device. For example, in the regenerative operating mode, the satellite may be further classified into a regenerative satellite that does not have an inter-satellite link (inter-satellite link, ISL), that is, there is no inter-satellite link between satellites; or a regenerative satellite that has an inter-satellite link, that is, there is an interface between satellites for direct data exchange, where the inter-satellite link uses a Xn interface; or a regenerative satellite that has a processing function of a distributed unit (distributed unit, DU) of the access network device, where in this scenario, the satellite functions as the DU.

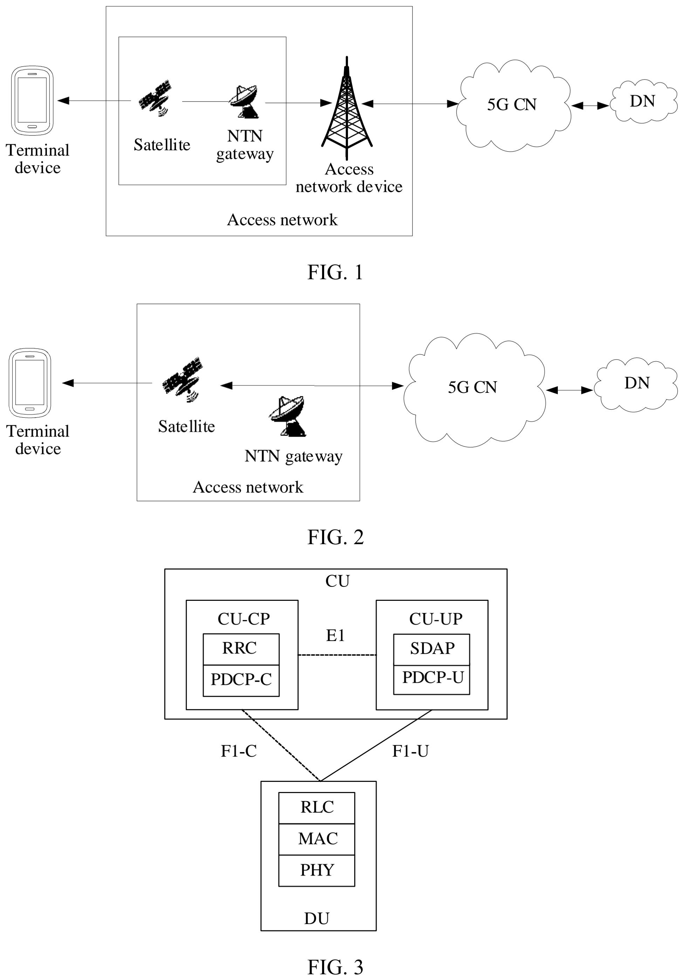

For example, FIG. 1 is a diagram of an NTN scenario to which an embodiment of this application is applicable. The NTN scenario may be an application scenario of a transparent forwarding architecture. In the scenario shown in FIG. 1, a terminal device may communicate with a 5G core network (core network, CN) through an access network, and then may be connected to a data network (data network, DN) through the 5G CN. A satellite and an NTN gateway (gateway) may be used as relay devices between the terminal device and an access network device, or as remote radio units (remote radio unit, RRU) of an access network device.

For example, FIG. 2 is a diagram of another NTN scenario to which an embodiment of this application is applicable. The NTN scenario may be an application scenario of a regenerative architecture. In the scenario shown in FIG. 2, a satellite may be used as an access network device, form an access network with an NTN gateway, and communicate with a core network through the NTN gateway. In addition, the satellite may further provide a radio access service for a terminal apparatus. FIG. 2 shows an example of a regenerative satellite architecture without an inter-satellite link.

It should be noted that FIG. 1 and FIG. 2 show only one satellite and one NTN gateway. In actual use, an architecture with a plurality of satellites and/or a plurality of NTN gateways may be adopted based on a requirement. Each satellite may provide a service for one or more terminal devices, each NTN gateway may correspond to one or more satellites, and each satellite may correspond to one or more NTN gateways. This is not specifically limited in embodiments of this application.

It should be noted that FIG. 1 and FIG. 2 are merely examples of the NTN scenarios, and the NTN scenarios may further include another specific scenario. This is not limited in this application.

Devices in embodiments of this application include a terminal device, an access network device, and a core network device. The terminal device is also referred to as user equipment (user equipment, UE), a mobile station (mobile station, MS), a mobile terminal (mobile terminal, MT), or the like, and is a device that provides voice and/or data connectivity for a user.

For example, the terminal device may be a hand-held device, a vehicle-mounted device, or the like that has a wireless connection function. Currently, some examples of the terminal device may be as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

The access network device may be a radio access network (radio access network, RAN) node (or device) that connects a terminal device to a wireless network, for example, a base station. Currently, some examples of the RAN node may be as follows: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a baseband unit (baseband unit, BBU), a wireless fidelity (wireless fidelity, Wi-Fi) access point (access point, AP), and the like.

In addition, in a network structure, the access network device may include a central unit (central unit, CU) node or a distributed unit (distributed unit, DU) node, or include a CU node and a DU node. An RAN device that includes the CU node and the DU node splits protocol layers of a gNB in an NR system. Functions of a part of the protocol layers are centrally controlled by a CU, and functions of a part or all of remaining protocol layers are distributed in a DU, and the CU centrally controls the DU, as shown in FIG. 3. Further, the CU may be further divided into a control plane (CU-CP) and a user plane (CU-UP). The CU-CP is responsible for a control plane function, mainly including radio resource control (radio resource control, RRC) and a packet data convergence protocol (packet data convergence protocol, PDCP) corresponding to the control plane (that is, PDCP-C). The PDCP-C is mainly responsible for data encryption/decryption, integrity protection, data transmission, and the like of the control plane. The CU-UP is responsible for a user plane function, mainly including a service data adaptation protocol (service data adaptation protocol, SDAP) and a PDCP corresponding to the user plane (that is, PDCP-U). The SDAP is mainly responsible for processing data of a core network and mapping a flow (flow) to a bearer. The PDCP-U is mainly responsible for data plane encryption/decryption, integrity protection, header compression, sequence number maintenance, data transmission, and the like. The CU-CP and the CU-UP are connected through an E1 interface. The CU-CP, on behalf of the gNB, is connected to the core network through an NG interface and connected to the DU through an F1 interface-control plane (namely, F1-C). The CU-UP is connected to the DU through an F1 interface-user plane (namely, F1-U). Certainly, in another possible implementation, the PDCP-C is alternatively in the CU-UP.

It may be understood that, in different systems, the CU (including the CU-CP or the CU-UP) or the DU may alternatively have different names, but a person skilled in the art can understand meanings of the names. For example, in an open radio access network (open radio access network, O-RAN) system, a CU may also be referred to as an O-CU (open CU), a DU may also be referred to as an O-DU, a CU-CP may also be referred to as an O-CU-CP, and a CU-UP may also be referred to as an O-CU-UP. For ease of description, the CU, the CU-CP, the CU-UP, and the DU are used as examples for description in this application.

The core network device is a device in the core network that provides service support for the terminal device. Currently, some examples of the core network device are an access and mobility management function (access and mobility management function, AMF) entity, a session management function (session management function, SMF) entity, a user plane function (user plane function, UPF) entity, and the like. This is not listed one by one herein. The AMF entity may be responsible for access management and mobility management of the terminal device. The SMF entity may be responsible for session management, for example, user session establishment. The UPF entity may be a functional entity on a user plane, and is mainly responsible for connecting to an external network. An entity in this application may also be referred to as a network element or a functional entity. For example, the AMF entity may also be referred to as an AMF network element or an AMF functional entity. For another example, the SMF entity may also be referred to as an SMF network element or an SMF functional entity.

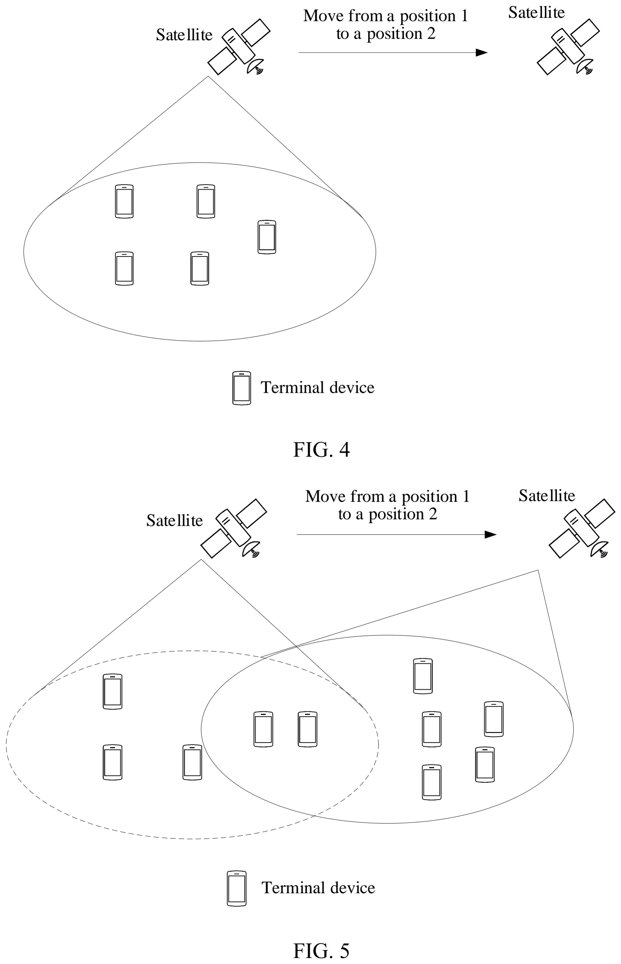

In the NTN system, movement of the non-terrestrial network device causes a large quantity of terminal devices to require cell handover simultaneously. For example, as shown in FIG. 4, for an earth fixed cell, within specific time, a satellite moves from a position 1 to a position 2, and the cell does not move with the satellite. When the satellite moves outside a coverage area of the cell, all terminal devices in the cell need to be handed over to a next satellite. In this scenario, in a cell handover process of the terminal device, after the handover is performed, a target satellite sends a path transfer request to the core network, to request the core network to switch a data transmission path of the terminal device to the target satellite. Therefore, a large quantity of path transfer requests are sent to the core network in short time, causing processing load of the core network and signaling congestion. In addition, in a feeder link switching scenario, feeder link switching also causes all terminal devices in a cell to be handed over to a next cell, which also causes the foregoing problem.

For an earth moving cell, the cell moves with a non-terrestrial network device, and in a process in which the non-terrestrial network device moves, terminal devices are continuously handed over in/out. For example, as shown in FIG. 5, a cell in a dashed line represents a cell position of a satellite at a position 1, a cell in a solid line represents a cell position of the satellite at a position 2, and the two positions partially overlap. Terminal devices outside an overlapping area and in the cell in the dashed line need to be handed over. Therefore, in this scenario, frequent cell handover of a large quantity of terminal devices also causes high signaling overheads.

Based on this, embodiments of this application provide a handover method, to improve efficiency of processing cell handover of a terminal device by a network.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

In this application, names of messages in the following procedures are merely used as examples. With evolution of communication technologies, names of messages in the following procedures may change. However, regardless of how the names change, provided that meaning of the messages is the same as a function or meaning of messages in this application, the messages fall within the protection scope of this application. For example, a handover complete message in this application may also be replaced with a message such as an RRC reconfiguration complete (RRCreconfigurationcomplete) message or an RRC connection reconfiguration complete (RRCConnectionreconfigurationcomplete) message.

A sequence of steps in the following procedures is merely an example. In actual application, the sequence of steps in each procedure may be adjusted.

It may be understood that a specific structure of an execution entity of the method provided in embodiments of this application is not particularly limited in this application, provided that a program that records code of the method provided in embodiments of this application can be run to perform communication according to the method provided in embodiments of this application. The following uses interaction between the terminal device, the access network device, and the core network device as an example for description.

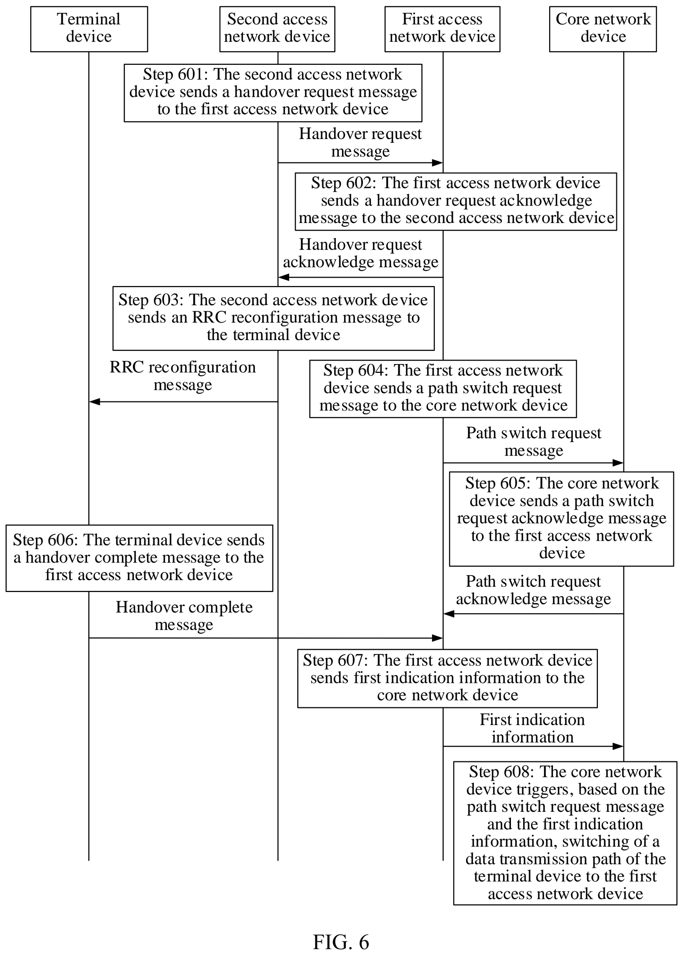

FIG. 6 is a schematic flowchart of a handover method according to an embodiment of this application. The method includes the following steps.

Step 601: A second access network device sends a handover request (handover request) message to a first access network device.

Correspondingly, the first access network device receives the handover request message from the second access network device.

The handover request message is used for requesting to hand over a terminal device to the first access network device. The second access network device may be a source access network device, and the first access network device may be as a target access network device.

The handover request message may be a handover request message in a conditional handover (conditional handover, CHO) procedure, or may be a handover request message in another type of handover procedure. This is not limited in this application.

In an implementation, the handover request message includes time information of the terminal device to be handed over to the first access network device, an identifier of the terminal device, and other information. For example, the time information may be a time point at which the terminal device disconnects from the second access network device or a time range in which the terminal device disconnects from the second access network device, or the time information may be a time point at which the terminal device accesses the first access network device or a time range in which the terminal device accesses the first access network device. The time information may be a specific time point. For example, the time point included in the time information may be coordinated universal time (universal time coordinated, UTC). Alternatively, the time point included in the time information may be a time offset value, and the offset value is an offset between a time point at which the terminal device is handed over to the first access network device and a time reference point. The time reference point may be preset. For example, the time reference point is receiving time at which a path switch request message is received. For another example, the time information includes a time range in which the terminal device is handed over to the first access network device. For example, the time range included in the time information is [t1, t2], indicating that the terminal device is handed over to the first access network device within the time range from a time point t1 to a time point t2.

For example, the identifier of the terminal device may be a cell radio network temporary identifier (cell radio network temporary identifier, C-RNTI) of the terminal device on the second access network device.

In an implementation, the first access network device includes a non-terrestrial network device. For example, a DU of the first access network device is a non-terrestrial network device, or the first access network device is a non-terrestrial network device.

In an implementation, the second access network device includes a non-terrestrial network device.

The foregoing non-terrestrial network device includes but is not limited to a device like a satellite.

A case in which the second access network device sends the handover request message is not limited in this application. For example, the second access network device configures the terminal device to perform measurement, and measurement configuration information is delivered by using an RRC reconfiguration message (RRCReconfiguration). The terminal device performs neighbor cell measurement based on the configuration, and reports a measurement result to the second access network device. The second network device selects a target cell based on the measurement result reported by the terminal device, for example, selects a cell of the first access network device as the target cell, and sends the handover request message to the first access network device.

The foregoing is merely an example. The second access network device may send the handover request message in another case. For example, blind handover is performed. To be specific, the second network device determines the target cell without depending on the measurement result.

Optionally, the second access network device may determine a plurality of cells as candidate target cells. The plurality of candidate target cells may be from a same access network device, or may be from different access network devices. The second access network device may send the handover request message to a plurality of access network devices. In this specification, the first access network device refers to all target access network devices.

Step 602: The first access network device sends a handover request acknowledge (acknowledge, ACK) message to the second access network device. The handover request acknowledge message includes configuration information of the target cell. Before sending the handover request acknowledge message, the first access network device performs access control. If the second access network device determines to accept a handover request, the first access network device sends the handover request acknowledge message.

Step 603: The second access network device sends an RRC reconfiguration message to the terminal device.

For example, the RRC reconfiguration message includes the handover request acknowledge message.

For example, the RRC reconfiguration message further includes related information about the target cell in the first access network device and a related configuration parameter required by the terminal device to access the target cell. The related information about the target cell may include, for example, a physical cell identifier (physical-layer cell identity, PCI) of the target cell and frequency information corresponding to the target cell. The related configuration parameter may include, for example, a C-RNTI allocated by the first access network device to the terminal device, and random access channel (random access channel, RACH) resource information required for accessing the target cell.

The terminal device receives the RRC reconfiguration message, obtains configuration information for accessing the first access network device, and then is synchronized to the first access network device based on the configuration information. A specific process is not described. It should be noted that the terminal device may access the first access network device in a random access procedure, or may access the first access network device in a free random access manner. This is not limited in this application.

Step 604: The first access network device sends a path switch request (path switch request) message to a core network device.

Correspondingly, the core network device receives the path switch request message from the first access network device. The core network device may be an AMF network element.

The path switch request message is used for requesting to switch a downlink data transmission path of the terminal device to the first access network device. Optionally, the path switch request message may include time information, and the time information may be from the handover request message. For example, if the time information is a specific time point, for example, the time information is UTC time, after receiving the path switch request message, the core network device triggers, at the time point, starting of path switch. Alternatively, the time information may be a time offset value. The time offset value is a time interval for performing path switch after the path switch request message is received. For example, time at which the path switch request message is received is T0, and the time information carried in the path switch request message is ΔT. After receiving the path switch request message, the core network device triggers, at T0+ΔT, starting of path switch. Alternatively, the time information may be a time range. The core network device may determine, based on a time range in which the terminal device accesses the first network device, a processing order of the path switch request message, or determine whether to perform path switch. A specific process is not limited in this application.

The path switch request message may further include the identifier of the terminal device, an identifier of a protocol data unit (protocol data unit, PDU) session of the terminal device, and a first address of the PDU session of the terminal device on the first access network device. For example, the first address is an IP address and a general packet radio service (general packet radio service, GPRS) tunneling protocol (GPRS Tunneling Protocol, GTP) tunneling endpoint identifier (Tunnel Endpoint Identifier). A UPF network element may transfer a PDU session path of the terminal device to the first access network device based on the first address. In addition, the path switch request message may further include other information. This is not listed one by one herein.

In this application, the path switch request message is sent between receiving the handover request message by the first access network device and receiving a handover complete message by the first access network device. It may also be considered that the path switch request message is sent after the first access network device receives the handover request message. Specifically, after receiving the handover request message, the first access network device does not need to wait for receiving the handover complete message, but sends the path switch request message before receiving the handover complete message. That is, sending of the path switch request message does not depend on whether the handover complete message is received, and the first access network device may send the path switch request message before receiving the handover complete message. Alternatively, a condition for sending the path switch request message is that the handover request message is received, that is, the first access network device determines, upon receiving the handover request message, that the path switch request message can be sent. Alternatively, a condition for sending the path switch request message is that the first access network device completes access control and sends the handover request acknowledge message to the second access network device, that is, the first access network device determines, upon sending the handover request acknowledge message, that the path switch request message can be sent. In another implementation, sending time of the path switch request message is between receiving time of the handover request message and receiving time of the handover complete message. The handover complete message indicates that air interface handover is completed. For example, the handover complete message may be an RRC message, for example, an RRC reconfiguration complete (RRCreconfigurationcomplete) message.

Correspondingly, after receiving the path switch request message, the core network device does not immediately trigger switching of the downlink data transmission path of the terminal device to the first access network device. The core network device may first parse information in the path switch request message, for example, obtain at least one of the time information, the identifier of the terminal device, the identifier of the PDU session of the terminal device, the first address of the PDU session, and other information that are in the path switch request message.

Optionally, the method further includes step 605: The core network device sends a path switch request acknowledge message to the first access network device.

The path switch request acknowledge message may include at least one of the identifier of the terminal device, an identifier of an uplink PDU session of the terminal device, a second address of the uplink PDU session of the terminal device on the UPF network element, and other information. For example, the second address is an IP address and a GTP tunnel endpoint identifier (GTP Tunnel Endpoint Identifier). The first access network device may send a PDU data packet of the terminal device to the UPF network element based on the second address.

When step 605 is performed, step 605 may be performed after step 608.

Step 606: The terminal device sends the handover complete message to the first access network device.

Correspondingly, the first access network device receives the handover complete message from the terminal device. For example, the handover complete message may be an RRCReconfigurationcomplete message.

For example, when receiving the RRC reconfiguration message in step 603, the terminal device may be synchronized to the first access network device. For example, UE may access the first access network device by initiating a random access procedure, or may access the target access network device in a free random access procedure. After the synchronization is completed, the handover complete message may be sent, to indicate that the handover from the second access network device to the first access network device is completed.

Step 607: The first access network device sends first indication information to the core network device when receiving the handover complete message from the terminal device, where the first indication information indicates that the terminal device is handed over to the first access network device, and the first indication information is associated with the terminal device. For example, the first indication information includes the identifier of the terminal device.

In an implementation, the first indication information is a preset message. In this implementation, the preset message may be a message pre-agreed on between the first access network device and the core network device. When receiving the preset message, the core network device determines that the terminal device is handed over to the first access network device.

The preset message may be a newly defined message, or may be an existing message. For example, a path switch request message may be used as the preset message. A difference between the path switch request message in this case and the path switch message in step 604 lies in that the path switch request message in this step does not include an address of the PDU session and other information, and only indicates that the terminal device is handed over to the first access network device.

In another implementation, the first indication information is a first uplink data packet from the terminal device. In this implementation, because the terminal device has accessed the first access network device, the terminal device may send an uplink data packet to the first access network device. If the terminal device has no uplink data to be sent, the first access network device may send an empty data packet. In this case, the first uplink data packet is an empty data packet. When receiving the first uplink data packet from the terminal device, the first access network device may forward the first uplink data packet to the core network device. After receiving the first uplink data packet, the core network device may determine that the terminal device is handed over to the first access network device. In this implementation, because sending of the uplink data packet requires the identifier of the uplink PDU session and the second address of the PDU session on the UPF network element that are included in the path switch request acknowledge message. Therefore, step 605 is performed before step 607.

Step 608: The core network device triggers, based on the path switch request message and the first indication information, switching of a data transmission path of the terminal device to the first access network device.

An example in which the core network device is an AMF network element is used. After receiving a path switch request, the AMF network element triggers path switch. The path switch request includes the first address of the PDU session of the terminal device on the first access network device. The UPF network element switches the data transmission path of the terminal device to the first access network device based on the first address, and the UPF network element may further release a user plane resource or a transport network layer (transport network layer, TNL) resource between the UPF network element and the second access network device.

In an implementation, if the path switch request acknowledge message in step 605 is performed after step 608, the first indication information in step 607 is implemented by using the preset message. If the path switch request acknowledge message in step 605 is performed before step 608, the first indication information in step 607 may be the preset message, or may be the first uplink data packet.

In an implementation, if a handover process of the terminal device is canceled or the handover fails, step 607 and step 608 may alternatively be replaced with the following steps:

The first access network device sends second indication information to the core network device, where the second indication information indicates to cancel switching of a data transmission path of the terminal device to the first access network device.

In an implementation, when receiving a handover cancellation request message from the second access network device, the first access network device sends the second indication information to the core network device. The handover cancellation request message indicates to cancel handover of the terminal device to the first access network device.

In an implementation, the first access network device determines to cancel the handover process, and sends the second indication information to the core network device.

In an implementation, when the first access network device does not receive the handover complete message, the first access network device may determine that the terminal device fails to be handed over, and send the second indication information to the core network device.

For example, the second indication information may include at least one of the identifier of the terminal device, an identifier of a downlink PDU session of the terminal device, and other information.

Correspondingly, the core network device triggers, based on the second indication information, cancellation of switching of the data transmission path of the terminal device to the first access network device. A specific process is not described.

According to the foregoing method, after receiving the handover request message, the first access network device sends the path switch request message to the core network device before receiving the handover complete message, so that the core network device can process the path switch request message in advance, thereby reducing a handover delay caused by processing the path switch request message, and improving handover efficiency of the terminal device. Particularly, in an NTN communication system, when a large quantity of terminal devices need to be handed over simultaneously due to movement of a non-terrestrial network device, because the core network device can obtain path switch request messages corresponding to these terminal devices in advance, the core network device has sufficient time to process the large quantity of path switch request messages before triggering path switch, thereby reducing a handover delay, avoiding signaling congestion, and improving system stability.

In the foregoing procedure, an example in which the source access network device (namely, the second access network device) configures one candidate target cell for the terminal device is used for description. In actual application, the source access network device may configure a plurality of candidate target cells for the terminal device, and the terminal device may select one cell from the plurality of candidate target cells as the target cell after the handover. The plurality of candidate target cells may belong to a same access network device, or may belong to a plurality of access network devices. The following uses two candidate target cells as an example for description.

In the following procedure, the second access network device configures a first candidate target cell and a second candidate target cell for the terminal device. The first candidate target cell belongs to the first access network device, and the second candidate target cell belongs to a third access network device.

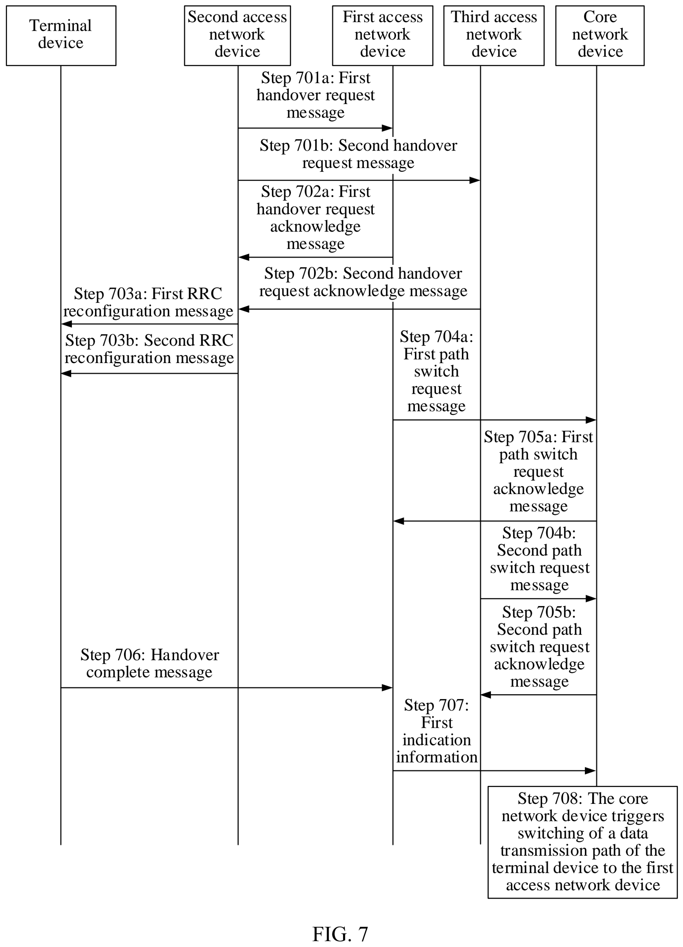

FIG. 7 is a schematic flowchart of a handover method according to an embodiment of this application. The method includes the following steps.

Step 701a: A second access network device sends a first handover request message to a first access network device.

Correspondingly, the first access network device receives the first handover request message from the second access network device.

Optionally, the method further includes step 702a: The first access network device sends a first handover request acknowledge message to the second access network device. The first handover request message is used for requesting to hand over a terminal device to the first access network device.

In an implementation, the first handover request message includes an identifier of the terminal device and configuration information for accessing a target cell by the terminal device, and may further include first time information of the terminal device to be handed over to the first access network device.

In an implementation, the first time information includes a time point at which the terminal device is handed over to the first access network device, and the terminal device is to be handed over to the first access network device at the time point. For example, the first time information may be a time point at which the terminal device disconnects from the second access network device or a time range in which the terminal device disconnects from the second access network device, or the first time information may be a time point at which the terminal device accesses the first access network device or a time range in which the terminal device accesses the first access network device. Time information may be a specific time point. For example, the time point included in the first time information may be UTC. Alternatively, the time point included in the first time information may be a time offset value. In another implementation, the first time information includes a time range in which the terminal device is handed over to the first access network device. For details about the time information, refer to the descriptions of step 601. Details are not described herein again.

Step 701b: A second access network device sends a second handover request message to a third access network device.

Optionally, the method further includes step 702b: The third access network device sends a second handover request acknowledge message to the second access network device. The second handover request message is used for requesting to hand over a terminal device to the third access network device.

In an implementation, the second handover request message includes identification information of the terminal device and configuration information for accessing a target cell by the terminal device, and may further include second time information of the terminal device to be handed over to the third access network device.

The first time information may be the same as or different from the second time information. This is not limited in this application. That the first time information may be different from the second time information may mean that the time point included in the first time information is different from a time point included in the second time information, or may mean that the time range included in the first time information is different from a time range included in the second time information. This is not limited in this application.

It may be understood that there is no execution sequence between step 701a and step 701b. When step 702a and step 702b are performed, there is no execution sequence between step 701a to step 702a and step 701b to step 702b.

Step 703a: The second access network device sends a first RRC reconfiguration message to the terminal device.

The first RRC reconfiguration message includes the first handover request acknowledge message. The first RRC reconfiguration message may further include related information about a first candidate target cell and a related configuration parameter required by the terminal device to access the first candidate target cell.

If the second access network device configures a third candidate target cell in the first access network device for the terminal device, the first RRC reconfiguration message may further include related information about the third candidate target cell and a related configuration parameter required by the terminal device to access the third candidate target cell.

Step 703b: The second access network device sends a second RRC reconfiguration message to the terminal device.

The second RRC reconfiguration message includes the second handover request acknowledge message. The second RRC reconfiguration message may further include related information about a second candidate target cell and a related configuration parameter required by the terminal device to access the second candidate target cell.

It should be noted that, in an implementation, the first RRC reconfiguration message and the second RRC reconfiguration message may be a same message. Specifically, the second access network device may send an RRC reconfiguration message to the terminal device. The RRC reconfiguration message includes related information about the second candidate target cell and the third candidate target cell, and related configuration information required by the terminal device to access the second candidate target cell and the third candidate target cell.

After receiving the first RRC reconfiguration message and the second RRC reconfiguration message, the terminal device may select one candidate target cell from the first candidate target cell and the second candidate target cell as the target cell after the handover. How the terminal device specifically selects the target cell is not limited in this application. Details are not described herein.

It may be understood that there is no execution sequence between step 703a and step 703b.

Step 704a: The first access network device sends a first path switch request message to a core network device.

The first path switch request message is used for requesting to switch a data transmission path of the terminal device to the first access network device. Optionally, the first path switch request message may include the first time information. Optionally, the first path switch request message may further include the identifier of the terminal device, an identifier of a PDU session of the terminal device, and a first address of the PDU session of the terminal device on the first access network device.

In an implementation, if the second access network device configures a plurality of cells in the first access network device as candidate target cells, the first access network device may send only one path switch request message to the core network device.

In this application, the first path switch request message is sent between receiving the first handover request message by the first access network device and receiving a handover complete message by the first access network device. After receiving the first handover request message, the first access network device does not need to wait for receiving the handover complete message, but sends the first path switch request message before receiving the handover complete message.

Step 704b: The third access network device sends a second path switch request message to a core network device.

The second path switch request message is used for requesting to switch a data transmission path of the terminal device to the third access network device. Optionally, the third path switch request message may include the second time information, and may further include the identifier of the terminal device, an identifier of a PDU of the terminal device, and a first address of the PDU session of the terminal device on the first access network device.

In this application, the second path switch request message is sent between receiving the second handover request message by the third access network device and receiving a handover complete message by the third access network device. After receiving the second handover request message, the third access network device does not need to wait for receiving the handover complete message, but sends the second path switch request message before receiving the handover complete message.

Correspondingly, after receiving the first path switch request message and the second path switch request message, the core network device does not immediately trigger switching of the data transmission path of the terminal device to the first access network device or the third access network device. The core network device may first parse information in the first path switch request message and the second path switch request message, for example, obtain the first time information, the second time information, the identifier of the terminal device, the identifier of the PDU of the terminal device, the first address of the PDU session of the terminal device, and other information.

After step 704a is performed, optionally, the method further includes step 705a: The core network device sends a first path switch request acknowledge message to the first access network device.

After step 704b is performed, optionally, the method further includes step 705b: The core network device sends a second path switch request acknowledge message to the third access network device.

The first path switch request acknowledge message and the second path switch request acknowledge message may include the identifier of the terminal device, an identifier of an uplink PDU session of the terminal device, and a second address of the PDU session of the terminal device on a UPF network element.

It may be understood that there is no execution sequence between step 704a and step 704b. When step 705a and step 705b are performed, there is no execution sequence between step 704a to step 705a and step 704b to step 705b.

In an implementation, assuming that the terminal device selects the first candidate target cell as the target cell after the handover, step 706 may be included.

Step 706: The terminal device sends the handover complete message to the first access network device.

Correspondingly, the first access network device receives the handover complete message from the terminal device.

An example in which the terminal device selects the first candidate target cell as the target cell after the handover is used herein. Therefore, the terminal device no longer sends the handover complete message to the third access network device.

The terminal device receives the first RRC reconfiguration message, obtains configuration information for accessing the first access network device, and then is synchronized to the first access network device based on the configuration information. After completing accessing the first access network device, the terminal device may send the handover complete message.

Step 707: The first access network device sends first indication information to the core network device when receiving the handover complete message from the terminal device, where the first indication information indicates that the terminal device is handed over to the first access network device.

Step 708: The core network device triggers, based on the path switch request message and the first indication information, switching of the data transmission path of the terminal device to the first access network device.

Optionally, after receiving the first indication information, the core network device cancels another path switch request. For example, when the core network device receives the first indication information from the first access network device, it indicates that the terminal device has accessed the first network device. Therefore, the second path switch request message from the third access network device may be canceled.

For specific content of step 707 and step 708, refer to descriptions of step 607 and step 608. Details are not described herein again.

In an implementation, the first path switch request acknowledge message in step 705a and the second path switch request acknowledge message in step 705b may alternatively be sent after step 708. If the first path switch request acknowledge message and the second path switch request acknowledge message are sent after step 708, the core network device may not send a path switch request acknowledge message to an access network device that does not send first indication information to the core network device. For example, if the third access network device does not send the first indication information, step 705b may not be performed.

If the path switch request acknowledge message in step 605 is performed after step 608, the first indication information in step 607 is implemented by using a preset message. If the path switch request acknowledge message in step 605 is performed before step 608, the first indication information in step 607 may be a preset message, or may be a first uplink data packet.

In this application, if the handover of the terminal device is canceled or the handover fails, step 707 and step 708 may alternatively be replaced with the following steps:

The first access network device sends second indication information to the core network device, where the second indication information indicates to cancel switching of the data transmission path of the terminal device to the first access network device. Correspondingly, the core network device triggers, based on the second indication information, cancellation of switching of the data transmission path of the terminal device to the first access network device. A specific process is not described.

For a case in which the first access network device sends the second indication information, refer to the foregoing descriptions. Details are not described herein again.

According to the foregoing method, when the second access network device configures a plurality of candidate target cells for the terminal device, a plurality of access network devices corresponding to the plurality of candidate target cells may send path switch request messages to the core network device in advance, so that the core network device can process the plurality of path switch request messages in advance, thereby reducing a handover delay caused by processing the path switch request messages, and improving handover efficiency of the terminal device.

In the foregoing procedure, when the terminal device is handed over to the first access network device, the first access network device indicates, to the core network device by using the first indication information, that the terminal device has been handed over to the first access network device. In this application, the core network device may alternatively determine, based on the time information in the path switch request message, whether the terminal device is handed over to the first access network device. Details are described below.

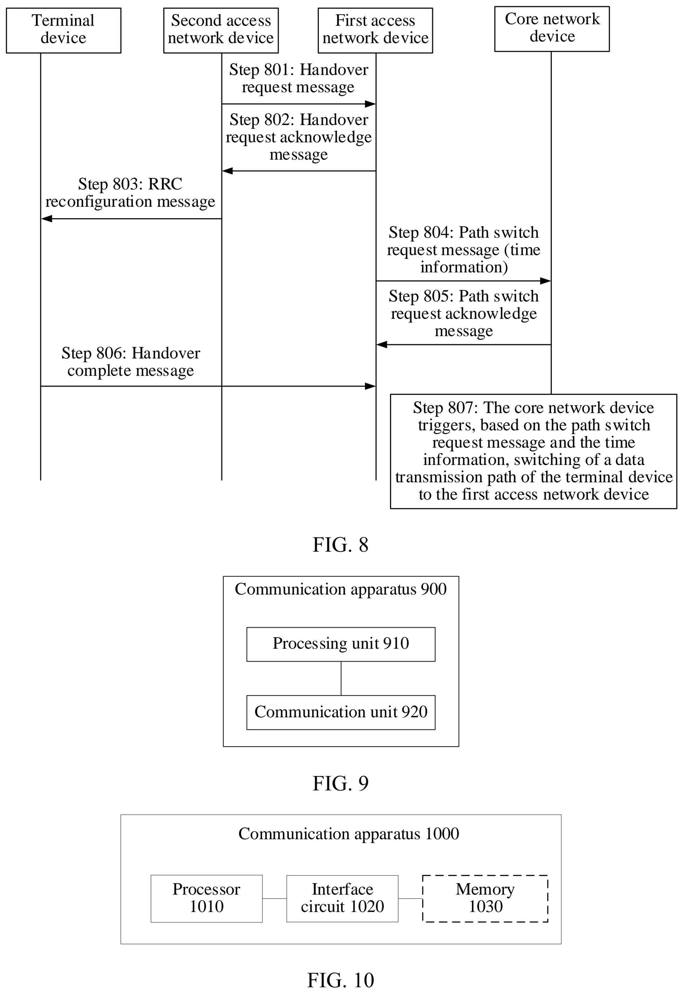

FIG. 8 is a schematic flowchart of a handover method according to an embodiment of this application. The method includes the following steps.

Step 801: A second access network device sends a handover request message to a first access network device.

Correspondingly, the first access network device receives the handover request message from the second access network device.

The handover request message is used for requesting to hand over a terminal device to the first access network device.

In an implementation, the first handover request message includes time information of the terminal device to be handed over to the first access network device, an identifier of the terminal device, and other information.

In an implementation, the time information includes a time point at which the terminal device is handed over to the first access network device, and the terminal device is to be handed over to the first access network device at the time point. For example, the time point included in the time information may be UTC. Alternatively, the time point included in the time information may be a time offset value, and the offset value is an offset between the time point at which the terminal device is handed over to the first access network device and a time reference point. The time reference point may be preset. For example, the time reference point is receiving time at which a path switch request message is received.

In another implementation, the time information includes a time range in which the terminal device is handed over to the first access network device. For example, the time range included in the time information is [t1, t2], indicating that the terminal device is handed over to the first access network device within the time range from a time point t1 to a time point t2.

For other content of the time information, refer to the descriptions of the time information in step 601. Details are not described herein again.

Optionally, the method further includes step 802: The first access network device sends a handover request acknowledge message to the second access network device.

Step 803: The second access network device sends an RRC reconfiguration message to the terminal device.

Step 804: The first access network device sends the path switch request message to a core network device.

In this application, the path switch request message is sent between receiving the handover request message by the first access network device and receiving a handover complete message by the first access network device. That is, sending of the path switch request message does not depend on whether the handover complete message is received, and the first access network device sends the path switch request message before receiving the handover complete message. Alternatively, a condition for sending the path switch request message is that the handover request message is received, that is, the first access network device determines, upon receiving the handover request message, that the path switch request message can be sent. Alternatively, a condition for sending the path switch request message is that the handover request acknowledge message is sent, that is, the first access network device can send the path switch request message upon sending the handover request acknowledge message to the second network device.

In another implementation, sending time of the path switch request message is between receiving time of the handover request message and receiving time of the handover complete message.

Correspondingly, after receiving a first path switch request message and a second path switch request message, the core network device does not immediately trigger switching of a data transmission path of the terminal device to the first access network device.

Optionally, the method further includes step 805: The core network device sends a path switch request acknowledge message to the first access network device.

Step 806: The terminal device sends the handover complete message to the first access network device.

For specific content of step 801 to step 806, refer to descriptions of step 601 to step 606. Details are not described herein again.

Step 807: The core network device triggers, based on the path switch request message and the time information, switching of the data transmission path of the terminal device to the first access network device.

In an implementation, the core network device triggers, at the time point indicated by the time information, and based on the path switch request message, switching of the data transmission path of the terminal device to the first access network device. For example, if the time point included in the time information is t0, the core network device triggers, at the time point t0, switching of the data transmission path of the terminal device to the first access network device.

In an implementation, the core network device triggers, at a maximum moment in the time range indicated by the time information, and based on the path switch request message, switching of the data transmission path of the terminal device to the first access network device. For example, if the time range included in the time information is [t1, t2], the core network device triggers, at the time point t2, switching of the data transmission path of the terminal device to the first access network device.

In this implementation, the maximum moment in the time range may alternatively be replaced with any moment in the time range, for example, replaced with a start moment in the time range or the like.

In an implementation, when step 805 is performed, step 805 may be performed after step 807.

In this application, if the handover of the terminal device is canceled or the handover fails, step 807 may alternatively be replaced with the following step: The first access network device sends second indication information to the core network device, where the second indication information indicates to cancel switching of the data transmission path of the terminal device to the first access network device. Correspondingly, the core network device triggers, based on the second indication information, cancellation of switching of the data transmission path of the terminal device to the first access network device. A specific process is not described.

According to the foregoing method, after receiving the handover request message, the first access network device sends the path switch request message to the core network device before receiving the handover complete message, so that the core network device can process the path switch request message in advance, thereby reducing a handover delay caused by processing the path switch request message, and improving handover efficiency of the terminal device. This method is particularly applicable to an NTN communication system. Further, the core network device may determine, based on the time information, when the terminal device accesses the first access network device, and may trigger, based on the time information, switching of the data transmission path of the terminal device to the first access network device. This reduces signaling overheads between the core network device and the access network device, improves resource utilization, and avoids a signaling storm.

It may be understood that, in embodiments of this application, the first access network device or the core network device may perform some or all of steps in embodiments of this application. These steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

It may be understood that, to implement functions in the foregoing embodiments, the first access network device or the core network device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 9 and FIG. 10 are diagrams of structures of possible communication apparatuses according to embodiments of this application. These communication apparatuses may be configured to implement functions of the first access network device or the core network device in the foregoing method embodiments, and therefore can also implement beneficial effects of the foregoing method embodiments. In embodiments of this application, the communication apparatus may be a first access network device or a core network device, or may be a module (for example, a chip) used in the first access network device or the core network device.

The communication apparatus 900 shown in FIG. 9 includes a processing unit 910 and a communication unit 920. The communication apparatus 900 is configured to implement a function of the first access network device or the core network device in the foregoing method embodiments.

When the communication apparatus 900 is configured to implement the function of the first access network device in the foregoing embodiments:
the processing unit is configured to receive a handover request message from a second access network device by using the communication unit; and
the processing unit is configured to: send a path switch request message to a core network device by using the communication unit; and send first indication information to the core network device when a handover complete message from a terminal device is received, where the first indication information indicates that the terminal device is handed over to the first access network device, and the path switch request message is sent between receiving the handover request message and receiving the handover complete message.

When the communication apparatus 900 is configured to implement the function of the core network device in the foregoing embodiments, the communication unit is configured to: receive a path switch request message from a first access network device; and receive first indication information from the first access network device, where the first indication information indicates that a terminal device is handed over to the first access network device; and
the processing unit is configured to trigger, based on the path switch request message and the first indication information, switching of a data transmission path of the terminal device to the first access network device.

When the communication apparatus 900 is configured to implement the function of the first access network device in the foregoing embodiments:
the processing unit is configured to receive a handover request message from a second access network device by using the communication unit, where the handover request message includes time information of a terminal device to be handed over to the first access network device; and
the processing unit is configured to send a path switch request message to a core network device by using the communication unit, where the handover request message includes the time information, and the path switch request message is sent between receiving the handover request message and receiving a handover complete message.

When the communication apparatus 900 is configured to implement the function of the core network device in the foregoing embodiments, the communication unit is configured to receive a path switch request message from a first access network device, where the path switch request message includes time information of a terminal device to be handed over to the first access network device; and the processing unit is configured to trigger, based on the path switch request message and the time information, switching of a data transmission path of the terminal device to the first access network device.

For more detailed descriptions about the processing unit 910 and the communication unit 920, directly refer to the related descriptions in the foregoing method embodiments. Details are not described herein again.

The communication apparatus 1000 shown in FIG. 10 includes a processor 1010 and an interface circuit 1020. The processor 1010 and the interface circuit 1020 are coupled to each other. It may be understood that the interface circuit 1020 may be a transceiver or an input/output interface. For example, the communication apparatus 1000 may further include a memory 1030, configured to: store instructions executed by the processor 1010, or store input data required by the processor 1010 to run the instructions, or store data generated after the processor 1010 runs the instructions.

When the communication apparatus 1000 is configured to implement the foregoing method embodiments, the processor 1010 is configured to implement the functions of the foregoing processing unit 910, and the interface circuit 1020 is configured to implement the functions of the foregoing communication unit 920.

When the communication apparatus is a chip used in a first access network device, the chip in the first access network device implements the functions of the first access network device in the foregoing method embodiments. The chip in the first access network device receives information from another module (for example, a radio frequency module or an antenna) in the first access network device, where the information is sent by a network device to the first access network device. Alternatively, the chip in the first access network device sends information to another module (for example, a radio frequency module or an antenna) in a terminal device, where the information is sent by the first access network device to a network device.

When the communication apparatus is a module used in a core network device, the module in the core network device implements the functions of the core network device in the foregoing method embodiments. The module of the core network device receives information from another module (for example, a radio frequency module or an antenna) in the core network device, where the information is sent by a first access network device to the core network device. Alternatively, the module of the core network device sends information to another module (for example, a radio frequency module or an antenna) in the core network device, where the information is sent by the core network device to a first access network device. The module in the core network device herein may be a chip of the core network device, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing a software instruction by the processor. The software instruction may include a corresponding software module. The software modules may be stored in a random access memory, a flash memory, a read-only memory, a programmable read-only memory, an erasable programmable read-only memory, an electrically erasable programmable read-only memory, a register, a hard disk drive, a removable hard disk drive, a compact disc read-only memory (compact disc read-only memory, CD-ROM), or any other form of storage medium well known in the art. For example, a storage medium is coupled to the processor, so that the processor can read information from the storage medium and write information into the storage medium. Certainly, the storage medium may alternatively be a component of the processor. The processor and the storage medium may be disposed in the ASIC. In addition, the ASIC may be located in the first access network device or the core network device. Certainly, the processor and the storage medium may alternatively exist in the first access network device or the core network device as discrete components.

A person skilled in the art should understand that embodiments of this application may be provided as a method, a system, or a computer program product. Therefore, this application may use a form of hardware-only embodiments, software-only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that an apparatus configured to implement a specific function in one or more procedures in the flowcharts and/or in one or more blocks in the block diagrams is generated by using instructions executed by a computer or the processor of any other programmable data processing device.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that such modifications and variations fall within the scope of protection defined by the following claims and equivalent technologies thereof.

## Claims

1. A handover method, wherein the method is applied to a first access network device and comprises:
receiving a handover request message from a second access network device;
sending a path switch request message to a core network device; and
sending first indication information to the core network device when a handover complete message from a terminal device is received, wherein the first indication information indicates that the terminal device is handed over to the first access network device, and the path switch request message is sent between receiving the handover request message and receiving the handover complete message.

2. The method according to claim 1, wherein the path switch request message comprises time information of the terminal device to be handed over to the first access network device.

3. The method according to claim 2, wherein the time information comprises a time point at which the terminal device is handed over to the first access network device; or
the time information comprises a time range in which the terminal device is handed over to the first access network device.

4. The method according to any one of claims 1 to 3, wherein the method further comprises:
receiving a path switch request acknowledge message from the core network device.

5. The method according to any one of claims 1 to 4, wherein the first indication information is a preset message; or
the first indication information is a first uplink data packet from the terminal device.

6. The method according to claim 1, wherein the method further comprises:
sending second indication information to the core network device, wherein the second indication information indicates to cancel switching of a data transmission path of the terminal device to the first access network device.

7. The method according to any one of claims 1 to 6, wherein the first access network device comprises a non-terrestrial network device.

8. A handover method, wherein the method is applied to a core network device, and the method comprises:
receiving a path switch request message from a first access network device;
receiving first indication information from the first access network device, wherein the first indication information indicates that a terminal device is handed over to the first access network device; and
triggering, based on the path switch request message and the first indication information, switching of a data transmission path of the terminal device to the first access network device.

9. The method according to claim 8, wherein the method further comprises:
sending a path switch request acknowledge message to the first access network device.

10. The method according to claim 8 or 9, wherein the first indication information is a preset message; or
the first indication information is a first uplink data packet from the terminal device.

11. The method according to claim 8, wherein the method further comprises:
receiving second indication information from the first access network device, wherein the second indication information indicates to cancel switching of the data transmission path of the terminal device to the first access network device; and
triggering, based on the second indication information, cancellation of switching of the data transmission path of the terminal device to the first access network device.

12. A handover method, wherein the method is applied to a first access network device, and the method comprises:
receiving a handover request message from a second access network device, wherein the handover request message comprises time information of the terminal device to be handed over to the first access network device; and
sending a path switch request message to a core network device, wherein the handover request message comprises the time information, and the path switch request message is sent between receiving the handover request message and receiving a handover complete message.

13. The method according to claim 12, wherein the time information is a time point at which the terminal device is handed over to the first access network device; or
the time information is a time range in which the terminal device is handed over to the first access network device.

14. The method according to claim 13, wherein the method further comprises:
receiving the handover complete message from the terminal device.

15. The method according to claim 14, wherein the method further comprises:
sending second indication information to the core network device when a handover cancellation request message from the second access network device is received, wherein the second indication information indicates to cancel switching of a data transmission path of the terminal device to the first access network device, and the handover cancellation request message indicates to cancel handover of the terminal device to the first access network device.

16. The method according to claim 14, wherein the method further comprises:
sending second indication information to the core network device, wherein the second indication information indicates to cancel switching of a data transmission path of the terminal device to the first access network device.

17. The method according to any one of claims 12 to 16, wherein the first access network device comprises a non-terrestrial network device.

18. A handover method, wherein the method is applied to a core network device, and the method comprises:
receiving a path switch request message from a first access network device, wherein the path switch request message comprises time information of the terminal device to be handed over to the first access network device; and
triggering, based on the path switch request message and the time information, switching of a data transmission path of the terminal device to the first access network device.

19. The method according to claim 18, wherein the time information is a time point at which the terminal device is handed over to the first access network device; and
the triggering, based on the path switch request message and the time information, switching of the data transmission path of the terminal device to the first access network device comprises:
triggering, at the time point based on the path switch request message, switching of the data transmission path of the terminal device to the first access network device.

20. The method according to claim 18, wherein the time information is a time range in which the terminal device is handed over to the first access network device; and
the triggering, based on the path switch request message and the time information, switching of the data transmission path of the terminal device to the first access network device comprises:
triggering, at a maximum moment in the time range based on the path switch request message, switching of the data transmission path of the terminal device to the first access network device.

21. A communication apparatus, comprising:
a processing unit, configured to receive a handover request message from a second access network device by using a communication unit, wherein
the processing unit is configured to: send a path switch request message to a core network device by using the communication unit; and send first indication information to the core network device when a handover complete message from a terminal device is received, wherein the first indication information indicates that the terminal device is handed over to the first access network device, and the path switch request message is sent between receiving the handover request message and receiving the handover complete message.

22. The apparatus according to claim 21, wherein the path switch request message comprises time information of the terminal device to be handed over to the first access network device.

23. The apparatus according to claim 22, wherein the time information comprises a time point at which the terminal device is handed over to the first access network device; or
the time information comprises a time range in which the terminal device is handed over to the first access network device.

24. The apparatus according to any one of claims 21 to 23, wherein the communication unit is further configured to:
receive a path switch request acknowledge message from the core network device.

25. The apparatus according to any one of claims 21 to 24, wherein the first indication information is a preset message; or
the first indication information is a first uplink data packet from the terminal device.

26. The apparatus according to claim 21, wherein the communication unit is further configured to:
send second indication information to the core network device, wherein the second indication information indicates to cancel switching of a data transmission path of the terminal device to the first access network device.

27. The apparatus according to any one of claims 21 to 26, wherein the first access network device comprises a non-terrestrial network device.

28. A communication apparatus, comprising:
a communication unit, configured to: receive a path switch request message from a first access network device; and receive first indication information from the first access network device, wherein the first indication information indicates that a terminal device is handed over to the first access network device; and
a processing unit, configured to trigger, based on the path switch request message and the first indication information, switching of a data transmission path of the terminal device to the first access network device.

29. The apparatus according to claim 28, wherein the communication unit is further configured to:
send a path switch request acknowledge message to the first access network device.

30. The apparatus according to claim 28 or 29, wherein the first indication information is a preset message; or
the first indication information is a first uplink data packet from the terminal device.

31. The apparatus according to claim 28, wherein the communication unit is further configured to:
receive second indication information from the first access network device, wherein the second indication information indicates to cancel switching of the data transmission path of the terminal device to the first access network device; and
trigger, based on the second indication information, cancellation of switching of the data transmission path of the terminal device to the first access network device.

32. A communication apparatus, comprising:
a processing unit, configured to receive a handover request message from a second access network device by using a communication unit, wherein the handover request message comprises time information of the terminal device to be handed over to the first access network device, wherein
the processing unit is configured to send a path switch request message to a core network device by using the communication unit, wherein the handover request message comprises the time information, and the path switch request message is sent between receiving the handover request message and receiving a handover complete message.

33. The apparatus according to claim 32, wherein the time information is a time point at which the terminal device is handed over to the first access network device; or
the time information is a time range in which the terminal device is handed over to the first access network device.

34. The apparatus according to claim 33, wherein the communication unit is further configured to:
receive the handover complete message from the terminal device.

35. The apparatus according to claim 34, wherein the communication unit is further configured to:
send second indication information to the core network device when a handover cancellation request message from the second access network device is received, wherein the second indication information indicates to cancel switching of a data transmission path of the terminal device to the first access network device, and the handover cancellation request message indicates to cancel handover of the terminal device to the first access network device.

36. The apparatus according to claim 34, wherein the communication unit is further configured to:
send second indication information to the core network device, wherein the second indication information indicates to cancel switching of a data transmission path of the terminal device to the first access network device.

37. The apparatus according to any one of claims 32 to 36, wherein the first access network device comprises a non-terrestrial network device.

38. A communication apparatus, comprising:
a communication unit, configured to receive a path switch request message from a first access network device, wherein the path switch request message comprises time information of the terminal device to be handed over to the first access network device; and
a processing unit, configured to trigger, based on the path switch request message and the time information, switching of a data transmission path of the terminal device to the first access network device.

39. The apparatus according to claim 38, wherein the time information is a time point at which the terminal device is handed over to the first access network device; and
the processing unit is specifically configured to:
trigger, at the time point based on the path switch request message, switching of the data transmission path of the terminal device to the first access network device.

40. The apparatus according to claim 38, wherein the time information is a time range in which the terminal device is handed over to the first access network device; and the processing unit is specifically configured to:
trigger, at a maximum moment in the time range based on the path switch request message, switching of the data transmission path of the terminal device to the first access network device.

41. A communication apparatus, comprising a processor and a memory, wherein
the processor is configured to execute a computer program or instructions stored in the memory, to enable the communication apparatus to implement the method according to any one of claims 1 to 20.

42. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 20 by using a logic circuit or by executing a code instruction.

43. A computer-readable storage medium, wherein the storage medium stores a computer program or instructions, and when the computer program or the instructions are executed by a communication apparatus, the method according to any one of claims 1 to 20 is implemented.

44. A communication system, comprising a first access network device configured to perform the method according to any one of claims 1 to 7 and claims 12 to 17 and a core network device configured to perform the method according to any one of claims 8 to 11 and claims 18 to 20.

45. A chip system, comprising a processor, wherein
the processor is configured to execute a computer program or instructions, to enable a communication apparatus comprising the chip system to implement the method according to any one of claims 1 to 20.

46. A computer program product, comprising instructions, wherein when the instructions are executed by a computer, the method according to any one of claims 1 to 20 is implemented.
